# EUROPEAN PATENT APPLICATION

(11) **EP 2 068 527 A1**
(43) Date of publication of application: **10.06.2009**
(21) Application number: 07023375.4
(22) Date of filing: 03.12.2007
(51) Int. Cl.: H04L 29/06

(54) **Network control of an MAP selection and of a route selection in a Mobile IP environment**

(71) Applicant: Nokia Siemens Networks Oy, 02610 Espoo (FI)
(72) Inventor: Andersen, Frank-Uwe, 10625 Berlin (DE); Fischer, Mathias, 36419 Spahl (DE); Köpsel, Andreas, 14199 Berlin (DE); Schläger, Morten, Dr., 14059 Berlin (DE)
(74) Representative: Bruglachner, Thomas E.

(57) **Abstract**

A serving mobile network comprises a home agent (HA), a mobile node (MN), and a signalling. The HA is connected to a decision maker. The MN is connected to the HA. The signalling is for communication between the MN and the HA, the signalling allows the HA to control the MN.

## Description

The application relates to a Mobile Internet Protocol network with improved signalling.

In recent years, a trend towards an all Internet Protocol (IP) based mobile network could be observed. A number of competing protocols defines mobility support for mobile networks co-exist today whereas Mobile IP and its derivatives and extensions define Internet Engineering Task Force (IETF) default mobility scheme. Limitations of basic Mobile IPv4 (MIPv4) and Mobile IPv6 (MIPv6) protocol standards have been mitigated by a number of extensions, including favoured extensions, namely Hierarchical Mobile IPv6 mobility management (HMIPv6) and Fast Handovers for Mobile IP version 6 (FMIPv6).

### A description of the HMIPv6 is shown in

H. Soliman, C. Castelluccia, K. El Malki, L. Bellier: Hierarchical Mobile IPv6 mobility management (HMIPv6), draft-ietf-mipshop-hmipv6-01.txt, February 2004, http://tools.ietf.org/id/draft-ietf-mipshop-hmipv6-01.txt.

### A description of the FMIPv6 is disclosed in

Rajeev Koodli: Fast Handovers for Mobile IPv6, draft-ietf-mipshop-fast-mipv6-01.txt, January 2004, http://tools.ietf.org/html/draft-ietf-mipshop-fast-mipv6-01.

The MIPv6 addresses an issue of IP semantic overloading by assigning a mobile node (MN) with two individual IP addresses, namely a home-address, which is for node identification and a care-of-address, which is for data packet forwarding. The MIP introduces a new functional entity, a home agent (HA) that intercepts data packets destined for the MN and forwards the intercepted data packets to a current network attachment point of the MN.

In order to overcome limitations from early Mobile IP designs that suffered from high loads induced at the HA, the MIPv6 introduces an extension named route optimisation (RO). Herein, a mobile node (MN) may establish a direct connection between its current care-of-address (CoA) and a correspondent node (CN) enabling both nodes to exchange packets directly between the two nodes and thus bypassing the HA.

The mobile node (MN) may create RO bindings for individual correspondent node (CN) autonomously based on local decisions. The process includes a Return Routability Procedure, which provides some assurance that the MN is addressable at its claimed care of address as well as at its home address. The Return Routability Procedure comprises steps of sending a Care-of Test Init (COTI) message and a Home Test Init (HoTI) message. The Return Routability procedure enables both the CN and the MN to identify forged signalling messages and to ensure a validity of established CoA to RO bindings between the MN and the CN.

The HMIPv6 introduces a new functional entity, called a local Mobility Anchor Point (MAP), for improving mobility service in the MIPv6 environment. The MN selects the MAP to act as intermediary between the MN and the CN. The MAP thus serves as a local home agent for the MN. Data packets are transmitted between the MN and the intermediary MAP. The MN manages two care of addresses. The first care-of-address (CoA-1) represents its current network attachment point and it is obtained from a subnet the MN is currently attached to. The second care-of-address (CoA-2) is obtained from a selected intermediary MAP. While the MN moves within a mobility area covered by the intermediary MAP, its CoA-1 may change frequently. However, route optimisation bindings utilize the CoA-2, which remains constant within the mobility area and thus do not affect the correspondent node.

The HMIPv6 mitigates a lengthy end-to-end round connection trip times for exchanging handover notifications between the MN and the CN. In a handover event, the MN is moved and is attached a different access router. The handover notification is signalled not on entire end-to-end connection that is between the MN and the CN. Rather, it is limited to a sub-path that is between the MN and the intermediary MAP. An optional route optimization binding may be established between the intermediary MAP and the CN. This also bypasses the HA and alleviates loads supported by the HA.

The allowable intermediary MAP is currently limited to a single node by an Internet Engineering Task Force (IETF) MIP working group to avert interference with existing IP routing protocols.

The MIPv6 and its extension HMIPv6 also allow arbitrary nodes to act as endpoints for a tunnel between the MN and the CN.

Research is also currently been conducted to control network resources, and thus mobility, within a heterogeneous environment of wireless mobile networks using a policy based networking approach.

The application provides a serving mobile network that comprises a home agent (HA), a mobile node (MN), and a signalling. The HA is connected to a decision maker. The MN is connected to the HA. The signalling is for communication between the MN and the HA, the signalling allows the HA to control the MN.

It is believed that the serving mobile network can make better MAP (Mobility Anchor Point) selection and route selection decisions than the mobile node. The mobile network has access to crucial information about the network, which the MN does not possess. This information includes current traffic congestion information and network characteristic.

The decision maker can select a route that is between a correspondent node (CN) and the MN. The decision maker can also select a Mobility Anchor Point (MAP) for the MN. The serving mobile network may support Internet Protocol. The MN may support Mobile Internet Protocol (MIP) and the MN can support Hierarchical MIP.

A method of selecting a route between a mobile node (MN) and a correspondent node (CN) comprises the step of receiving a route information by a home agent (HA) from a decision maker, and sending the route information by the HA to the CN. The MN is attached to a serving mobile network.

The method may comprise the further step of selecting the route by the decision maker. The selection of route may be policy based. The method can comprise the further steps of storing the route information by the CN, and sending data packets by the CN to the MN, the data packets transmit on a route, as described by the routing information.

A method of selecting a Mobility Anchor Point (MAP) for a mobile node (MN) comprises the step of receiving a selected MAP information by a home agent (HA) from a decision maker, and sending the selected MAP information by the HA to the MN. The MN is attached to a serving mobile network.

The method can comprise the further step of requesting known MAPs from the MN by the HA. The method can also comprise the further step of sending a list of MAPs by the MN to the HA. The method may comprise the further step of sending the list of MAP by the HA to the decision maker and it may comprise the further step of selecting the MAP by the decision maker.

The method can comprise the further step of informing the MN to release an assigned MAP and it can comprise the further step of informing the MN to be attached the selected MAP. The selection of the MAP can also be based on the list of MAPs and network information.

A method of selecting a Mobility Anchor Point (MAP) for a mobile node (MN) comprises the step of informing the MN to select the MAP. The MN is attached to a serving mobile network.

A method of selecting a Mobility Anchor Point (MAP) for a mobile node (MN) is described below. The MN is attached to a serving mobile network. The method comprises the step of sending out at least one announcement to the MN, the at least one announcement comprises an address of the selected MAP.

The method can comprise the further step of selecting a MAP for the MN by a decision maker. The method can comprise the further step of receiving the announcements by the MN. The method can comprise the further step of attaching to the selected MAP by the MN. The announcement can be in the form of a route advertisement. A header of the announcement can comprise the address of the selected MN. A payload field of the announcement can comprise the address of the selected MN.

The mobile network can provide a fine-grained control over data paths and established tunnels. It is believed that the fine-grained control results in better balancing of load among the data paths. The establishment of tunnels include tunnelling protocols. This fine-grained control can be for a complete data packet-forwarding path, which passes through a plurality of MAPs.

Future mobility schemes for mobile networks can provide more fine-grained mobility schemes that extend terminal based mobility to flow based mobility schemes. It is believed that mobile nodes (MNs) can be capable of shifting individual active application flows between different network links. For an optimized flow to access link mapping that includes an entirety of mobile nodes within a geographic area and available radio access technologies, the mobile network must make a joint decision. The joint decision includes among others the following information: i) load conditions within the core and the backhauling links connecting the radio access network to the core network, ii) motion vectors of all UEs (user equipments) currently active within a specific geographic area, and iii) quality of service constraints defined by the applications being active on the UE. As an example, consider stationary UEs with best effort quality of service constraints. Such UEs or MNs are favoured candidates for being moved to radio access technologies with limited mobility capabilities or cell coverage. Such information is only available in the mobile network. However, in Hierarchical Mobile IP, the MN is responsible for actually selecting the mobility anchor point. The application enables the network to signal its link assignment decision to the UE including the selected MAP while still maintaining backward compatibility to existing MIPv6 components.

Each MAP covers a dedicated mobility area, wherein changes of a mobile node's network attachment point do not affect route optimization bindings at any correspondent node (CN). The MAP shields handover events from any CN currently maintaining a communication association with the MN and thus reduces the induced end-to-end signalling effort.

The mobile network can appropriately select the Mobility Anchor Point, which is important for mobility control and thus resource management, in heterogeneous networks. The resource management controls resource allocation and utilization within the heterogeneity of mobile networks under control, and may enable load balancing among them. An inappropriate MAP can lead to excessive waste of network resource for unnecessary end-to-end signal traffic. This is especially significant in the case of frequent handover.

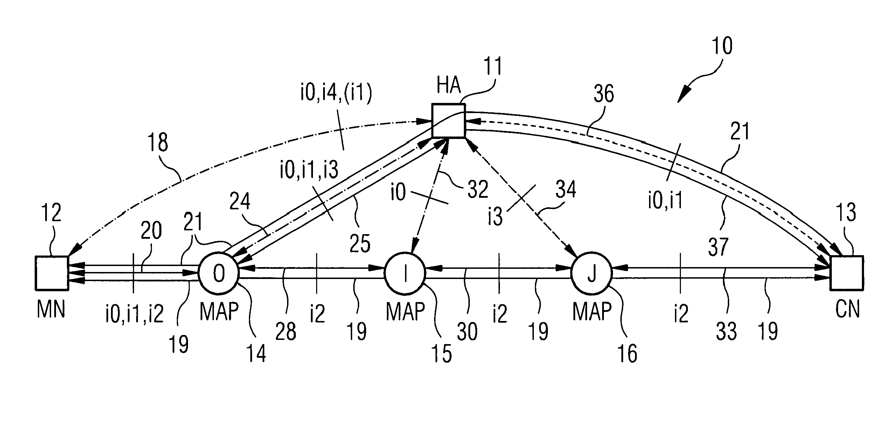

Fig. 1 illustrates an overview of architecture of an IP based improved network.

Fig. 1 depicts an overview of architecture of an IP based improved network 10. The improved network 10 provides an improved handover and an improved routing of traffic for Mobility IP and thereby facilitating a deployment of Mobile IP in 3GPP type of network.

The improved network 10 includes a home agent (HA) 11 and a plurality of Mobility Anchor Points, MAP[O] 14, MAP[I] 15, and MAP[J] 16. The improved network 10 is attached to a mobile node (MN) 12 and a correspondent node (CN) 13.

The HA 11 is connected to the MN 12, to the CN 13 and to the plurality of MAP[O] 14, MAP[I] 15, and MAP[J] 16. The MN 12 is connected to the MAP[O] 14 whereas the MAP[O] 14 is connected to the MAP[I] 15. The MAP[I] 15 is connected to the MAP[J] 16 whereas the MAP[J] 16 is connected to the CN 13.

As depicted in FIG. 1, the MN 12 is connected to the CN 13 via a first route and a second route. The first route is via a MIP user plane 19, which passes through the MAP[O] 14, MAP [I] 15, and MAP[J] 16. A MIP improved route user-traffic i2 is sent via the MIP user plane 19. The MIP improved route user-traffic i2 includes one or more flows of data packets. The data packets have voice data. The second route is via a MIP user plane 21 that passes through the MAP[O] 14 and the HA 11. The MIP signalling i0 that is between the CN 13 and the MN 12 is sent via the MIP user plane 21.

The MN 12 is connected to the HA 11 by a MAP control plane 18. A MIP signalling i0 and an extended MIP signalling i4 are transmitted via the MAP control plan 18. The MN 12 is also connected to the MAP[O] 14 via a MIP user plane 20, which transports a MIP user traffic i1. The MIP user traffic i1 includes one or more flows of the data packets.

The MAP[O] 14 is connected to the HA 11 via a MAP control plane 24 and a MIP user plane 25. A MAP management i3 is sent via the MAP control plane 24. The MIP user traffic i1 is transmitted via the MIP user plane 25. The MAP[O] 14 is also connected to the MAP[I] 15 via a MIP user plane 28. The MIP improved route user-traffic i2 is transmitted via the MIP user plane 28.

The MAP[I] 15 is connected to the MAP[J] 16 via a MIP user plane 30. The MIP improved route user-traffic i2 is transmitted via the MIP user plane 30. The MAP[I] 15 is also connected to the HA 11 via a MAP control plane 32. The MAP management i3 is sent via the MAP control plane 32.

The MAP[J] 16 is connected to the CN 13 via a MIP user plane 33. The MIP improved route user-traffic i2 is transmitted via the MIP user plane 33. The MAP[J] 16 is also connected to the HA 11 via a MAP control plane 34. The MAP management i3 is sent via the MAP control plane 34.

The HA 11 is connected to the CN 13 via a MIP control plane 36. The MIP signalling i0 is transmitted via the MIP control plane 36. The HA 11 is also connected to the CN 13 via a MIP user plane 37. The MIP user traffic i1 is transmitted via the MIP control plane 36.

In a broader sense, the improved network 10 may include the Internet. The improved network 10 includes a decision maker entity for selecting a route or a MAP. A Mobile IP proxy can replace the MN 12. The MIP proxy can be in a path between the MN 12 and the HA 11. The MIP proxy acts a surrogate mobile node and a surrogate home agent.

The MN 12 can also send MIP user traffic i1 to the CN 13 through the HA 11, which bypasses the MAP[O] 14. In this case, the MAP control plane 18, as provided here, transports the MIP user traffic i1 between the HA 11 and the MN 12.

The MN 12 may be a mobile computing station, such as laptop or personal digital assistants for serving a user. The MN 12 can be attached to its home network or to a foreign network.

The improved network 10 can control selection of route between the MN 12 and the CN 13. The improved network 10 makes policy-based decisions as to whether the MN 12 should create routing paths directly without any intervention by the serving improved network 10. The decision may be provided by a decision-making entity within the improved network 10.

The MN 12 is enabled to support the HMIPv6 and is used for connecting to its home network or to a foreign network. The MN 12 sends and receives data packets from other nodes via the improved network 10.

The HA 11 receives data packets destined for the MN 12 or destined for the CN 13 and forwards the received data packets its destination. The HA 11 can receive route selection information from the improved network 10 or from the MN 12. The HA 11 forwards the selection information to the CN 13. The selection information includes binding information and care of address of the MN 12. The selection information establishes a route of data packet flow between the CN 13 and the MN 12. The selection information can be in the form of the MIP signalling i0 or the extended MIP signalling i4. The MIP signalling i0 includes messages whilst the extended MIP signalling i4 includes extended messages.

The HA 11 is used to control the MAP[O] 14, MAP[I] 15, and MAP[J] 16 as well as the MN 12. The control is based on information received from the improved network 10. The control can instruct the MN 12 to establish a binding with an MAP without any restriction of time. The control can be in the form of control commands. The HA 11 is also used for sending data packets to the MAP[O] 14 or the CN 13 and for sending data from the MAP[O] 14 or the CN 13.

The MAP[O] 14, MAP[I] 15 or MAP[J] 16 serves as local home agent to a MN, such as the MN 12. The CN 13 communicates with the MN 12 via the improved network 10.

The MIP control plane 36 provides a pathway for a transfer of the messages and of the extended messages between the HA 11 and the MN 12. The messages or extended messages are a form of control commands. The MAP control plane 18, 24, 32, or 34 provides a pathway to which transfer of control commands between the HA 11 and the MN 11, or between the HA 11 and any of the MAP[0] 14, MAP[I] 15, or MAP[J] 16. The MIP user plane 19, 20, 21, 25, 28, 30, 33, or 37 provides a pathway via which data packets are sent. The data packets include voice signals.

The MIP signalling i0 as provided here, is used for selection of route for the MN 12. The MAP management i3 is used for controlling the data flow between a MAP and another node. The other node may be a MN 12 or another MAP. The extended MIP signalling i4 is used for sending extended messages between the HA 11 and the MN 12 to control selection of a MAP for the MN 12.

The extended MIP signalling i4 is optional or additional to existing HA and MN signalling. These extended MIP signalling i4 allows a backward compatibility for legacy MIPv6-enabled mobile nodes. The extended MIP signalling i4 do not affect the signalling for the CN 13.

A list of the extended messages is shown below.

### 1. "Get available MAPs" message

The HA 11 sends the message to the MN 12. This message requests the MN 12 to send a list of all known potential MAPs, to the HA 11.

### 2. "List available MAPs" message

The MN 12 sends this message to the HA 11. The message informs the HA 11 of a list of potential MAPs that is known to the MN 12. Through this message, the serving improved network 10 may learn of the potential MAPs that are within range of the MN 12. Some of the potential MAPs may not be managed by a local network operator but is managed by another network operator. A type of dynamic roaming agreement may exist between the different network operators.

### 3. "Use MAP" message

The HA 11 sends this message to the MN 12. The message includes a list of suggested MAPs with priority values for the MN 12 to use. The MN 12 selects the MAP listed the message as its local home agent. The MN 12 is not allowed to use another MAP within the current improved network 10. The MN 12 may use a MAP located in a non-operator wireless access network, such as an office wireless access.

### 4. "Release MAP" message

This message is sent from the HA 11 to the MN 12. This message is sent by the HA 11 to instruct the MN 12 to stop using the MAP as a local HA. The MAP may be previously assigned to the MN 12.

### 5. "Self-Selection" message

This message is sent by the HA 11 to the MN 12. The message authorizes the MN 12 to select a MAP based on information available to the MN 12.

Methods of network controlled MAP selection or selection of route are show below.

A method of a network controlled MAP selection comprises the step of obtaining MAP information by the improved network 10. The improved network 10 queries the MN 12 by sending the "Get available MAPs" message to the MN via the HA 11. The MN 12 then replies by sending the "List available MAPs" message to the HA 11. The HA 11 later forwards the reply to the improved network 10.

A network need may later trigger the improved network 10 to select the MAP. The triggering may be due the need to deliver a certain quality of service to a network subscriber or to balance load within the improved network 10.

The improved network 10 may select a MAP for the MN 12 or leave the selection of the MAP the MN 12.

In a case, wherein the improved network 10 selects the MAP for the MN 12, the improved network 10 evaluates the available MAPS together with other network information that are available to the improved network 10. The other information may include network hardware characteristic, required quality of service, and current network traffic condition. Then, the improved network 10 then selects a MAP for the MN 12 based on policy. The improved network 10 later informs the MN 12, via the HA 11, to release its current attached MAP with the "Release MAP" message. After this, the improved network 10 informs the MN 12, via the HA 11, of the selected MAP with the "Use MAP" message.

In another case, wherein the improved network 10 leaves the selection of the MAP to the MN 12, the improved network 10 informs the MN 12 of this decision by sending the "Self selection" message to the MN 12, via the HA 11.

Another method of network controlled MAP selection includes the step of paging for the MN 12 to connect to a specific MAP by the improved network 10. The MN 12 has IP connectivity is registered with the improved network 10 via a Remote-Authentication-Dial-In-User-Service (RADIUS). The MN 12 is not connected to any MAP.

The MN 12 receives periodic broadcast of MAP messages. The broadcast is in accordance with the network operator's MIP configuration and policies. The MAP messages have an extended header. The extended header includes the current IPv6 address of the specific MAP.

Then, the MN 12 responds to the MAP messages, by connecting to the selecting the specific MAP as its MAP and connecting the specific MAP. The UE later determines as to whether to connect to any MAP and when to connect the MAP. Later, the UE may a MAP and register with the MAP.

A method of network controlled selection of a route between the MN 12 and the CN 13 is shown below. The improved network 10 may select the route or leave the selection of route to the MN 12.

In a case, wherein the improved network 10 selects the route, the HA 11 receives selected route information from the improved network 10.

The improved network 10 is firstly triggered to the select the route. The trigger may originate from a network need. Later, the improved network 10 selects the route and afterward informs the MN 12 of the selected route via the HA 11. The information includes a specified care of address of the MN 12 and may include a data-packet flow binding. Then, the CN 13 stores the selected route information. The selected route information replaces current route information. Data packets from the CN 13 to the MN 12 are later transmitted via the selected route.

In another case, wherein the MN 12 selects the route, the HA 11 receives the selected route information from the MN 12 and the improved network 10.

The MN 12 is initially triggered to select the route. The MN 12 may be triggered by advertisements from router. The MN 12 is attached to the router. Then, the MN 12 sends the selected route information to the CN 13 via the HA 11. The CN 13 afterward stores the selected route information.

The method advantageously enabling the improved network 10 to create arbitrary data paths that provides a required quality of service (QOS) between an MAP serving MAP, which is shown here as here MAP[O], and an MAP providing an tunnel endpoint near the CN 13, which is shown here as MAP[J]. The improved network 10 may configure an arbitrary number of MAPS in the tunnel via the interface i3.

The mobile improved network 10 may advantageously change the MAP to balance load between the multiple MAPs, or to optimize a path.

In a generic sense, the method of network controlled MAP selection or route selection can be applied to a Mobile IP or to a Mobile IP Proxy. The decision maker of the improved network 10 can perform the selection of the route or of the MAP by. The extended signalling can be implemented using MIP header extensions without sacrificing any existing functionality and without loss of compatibility with the existing standard. Other ways of implementing the extended signalling are possible. The MN 12 may be also connected to the RADIUS or to other service, such as DIAMETER. The MAP messages may have a payload field instead of the extended header.

In a case, wherein the MN 12 does not support HMIPv6 or the MN 12 chooses not be attached to a MAP, such as the MAP[O] 14, the MN 12 can transmit the MIP user traffic 11 to the CN 13 via the MAP control plan 18.

In another words, the embodiment provides an improved signalling between a home agent (HA) and a mobile node (MN) of a serving mobile network. The improved signalling includes extensions for the Mobile IPv6 (MIPv6) and the Hierarchical Mobile IPv6 mobility management (HMIPv6).

These extensions enable the mobile network to select a Mobility Anchor Point (MAP) for the MN and to control a selection of route that is between the MN and a correspondent node (CN).

The extended mobile network is able to establish the selected route, to remove the established route at any point in time, or to leave the selection route to the MN. The establishment of the selected route is via specifying a care-of-address (CoA). The extended mobile network is also able to remove any previously established binding with the MAP at any point in time.

The mobile network implements these extensions via the HA. Instructions from the mobile network regarding the MAP or the selection of route is signalled to the MN via the HA. The MN receives signalling regarding route selection and implements them.

The mobile network can change the MAP to which the MN is attached. The change is independent of a state or of a preference of the attached MN.

The mobile network can make the MN connect to a MAP and register using a MIP mechanism. If the MN is not connected to any MAP, it can decide as to whether it should connect to a MAP and when the connection should occur. The MN has IP connectivity and it is already registered with the mobile network. The registration may be via a Remote-Authentication-Dial-In-User-Service (RADIUS) or a DIAMETER.

### List of abbreviations

- CN: correspondent node
- CoA: care-of-address
- CoTI: Care-of Test Init
- F-MIP: Fast Handovers for Mobile IP
- HA: home agent,
- H-MIP: Hierarchical MIP
- HMIPv6: Hierarchical Mobile IP version 6 mobility management
- HoTI: Home Test Init
- IETF: Internet Engineering Task Force
- IP: Internet protocol
- IPv6: IP version 6
- MAP: Mobility Anchor Point
- MIP: Mobile IP
- MIPv6: Mobile IP version 6
- MN: mobile node
- RADIUS: Remote Authentication Dial In User Service
- RO: route optimization

### Reference numbers

- 10: improved network
- 11: home agent (HA)
- 12: mobile node (MN)
- 13: correspondent node (CN)
- 14: Mobility Anchor Point (MAP[O])
- 15: Mobility Anchor Point (MAP[I])
- 16: Mobility Anchor Point (MAP[J])
- 18: MAP control plane
- 19: MIP user plane
- 20: MIP user plane
- 21: MIP user plane
- 24: MAP control plane
- 25: MIP user plane
- 28: MIP user plane
- 30: MIP user plane
- 32: MAP control plane
- 33: MIP user plane
- 34: MAP control plane
- 36: MIP control plane
- 37: MIP user plane
- 10: MIP signalling
- i1: MIP user traffic
- i2: MIP improved route user-traffic
- i3: MAP management
- i4: extended MIP signalling

## Claims

1. A serving mobile network (10) that comprises
- a home agent (HA) (11), the HA (11) is connected to a decision maker,
- a mobile node (MN) (12), the MN (12) is connected to the HA (11), and
- a signalling (i0, i4), the signalling (i0, i4) is for communication between the MN (12) and the HA (11), the signalling (i0, i4) allows the HA (11) to control the MN (12).

2. The serving mobile network (10) according to claim 1
**characterised in that** the decision maker is for selecting a route that is between a correspondent node (CN) (13) and the MN (12).

3. The serving mobile network (10) according to claim 1 or 2
**characterised in that** the decision maker is for selecting a Mobility Anchor Point (MAP) (14, 15, 16) for the MN (12).

4. The serving mobile network (10) according to one of the preceding of claims
**characterised in that** the serving mobile network (10) supports Internet Protocol.

5. The serving mobile network (10) according to one of the preceding of claims
**characterised in that** the MN (12) supports Mobile Internet Protocol (MIP).

6. The serving mobile network (10) according to one of the preceding of claims
**characterised in that** the MN (12) supports Hierarchical MIP.

7. A method of selecting a route between a mobile node (MN) (12) and a correspondent node (CN) (13), the MN (12) being attached to a serving mobile network (10), the method comprising the step of
- receiving a route information by a home agent (HA) (11) from a decision maker, and
- sending the route information by the HA (11) to the CN (13).

8. The method according to claim 7, the method comprises the further step of selecting the route by the decision maker

9. The method according to claim 8,
**characterised in that** the selection of route is policy based.

10. The method according to one of the claims 7 to 9, the method comprises the further steps of
- storing the route information by the CN (13), and
- sending data packets by the CN (13) to the MN (12), the data packets transmit on a route, as described by the routing information.

11. A method of selecting a Mobility Anchor Point (MAP) (14, 15, 16) for a mobile node (MN) (12), the MN (12) is attached to a serving mobile network (10), the method comprising the step of
- receiving a selected MAP information by a home agent (HA) (11) from a decision maker, and
- sending the selected MAP information by the HA (11) to the MN (12).

12. The method according to claim 11, the method comprises the further step of requesting known MAPs (14, 15, 16) from the MN (12) by the HA (11).

13. The method according to claim 11 or 12, the method comprises the further step of sending a list of MAPs (14, 15, 16) by the MN (12) to the HA (11).

14. The method according to one of the claims 11 to 13, the method comprises the further step of sending the list of MAPs (14, 15, 16) by the HA (11) to the decision maker.

15. The method according to one of the claims 11 to 14, the method comprises the further step of selecting the MAP (14, 15, 16) by the decision maker.

16. The method according to claim 15,
**characterised in that** the selection of the MAP (14, 15, 16) is based on the list of MAPs (14, 15, 16) and network information.

17. The method according to one of the claims 11 to 16, the method comprises the further step of informing the MN (12) to release an assigned MAP (14, 15, 16).

18. The method according to one of the claims 11 to 17, the method comprises the further step of informing the MN (12) to be attached to the selected MAP (14, 15, 16).

19. A method of selecting a Mobility Anchor Point (MAP) (14, 15, 16) for a mobile node (MN) (12), the MN (12) is attached to a serving mobile network (10), the method comprising the step of informing the MN (12) to select the MAP (14, 15, 16).

20. A method of selecting a Mobility Anchor Point (MAP) (14, 15, 16) for a mobile node (MN) (12), the MN (12) is attached to a serving mobile network (10), the method comprising the step of sending out at least one announcement comprising an address of the selected MAP (14, 15, 16) to the MN (12).

21. The method according to claim 20, the method comprises the further step of selecting a MAP (14, 15, 16) for the MN (12) by a decision maker.

22. The method according to claim 20 or 21, the method comprises the further step of receiving the announcements by the MN (12).

23. The method according to one of the claims 20 to 22, the method comprises the further step of attaching to the selected MAP (14, 15, 16) by the MN (12).

24. The method according to one of the claims 20 to 23,
**characterised in that** the announcement is in the form of a route advertisement.

25. The method according to one of the claims 20 to 24,
**characterised in that** a header of the announcement comprises the address of the selected MN (12).

26. The method according to one of the claims 20 to 24,
**characterised in that** a payload field of the announcement comprises the address of the selected MN (12).
